(19) Europäisches Patentamt
European Patent Office
Office européen des brevets

(11) **EP 3 083 709 B1**

(12) **EUROPÄISCHE PATENTSCHRIFT**

(45) Veröffentlichungstag und Bekanntmachung des Hinweises auf die Patenterteilung:
**30.08.2017 Patentblatt 2017/35**

(51) Int Cl.:
***C08F 112/08*** *(2006.01)*     ***C08F 2/38*** *(2006.01)*
*C08F 8/00* *(2006.01)*

(21) Anmeldenummer: **14800054.0**

(22) Anmeldetag: **19.11.2014**

(86) Internationale Anmeldenummer:
**PCT/EP2014/075015**

(87) Internationale Veröffentlichungsnummer:
**WO 2015/090818 (25.06.2015 Gazette 2015/25)**

(54) **VERFAHREN ZUR HERSTELLUNG KURZKETTIGER ENDGRUPPENFUNKTIONALISIERTER MAKROMOLEKÜLE AUF STYROLBASIS**

PROCESS FOR PRODUCING SHORT-CHAIN END-GROUP-FUNCTIONALIZED MACROMOLECULES BASED ON STYRENE

PROCÉDÉ DE PRODUCTION DE MACROMOLÉCULES À CHAÎNE COURTE, FONCTIONNALISÉES PAR DES GROUPES TERMINAUX, À BASE DE STYRÈNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2013 DE 102013226502**

(43) Veröffentlichungstag der Anmeldung:
**26.10.2016 Patentblatt 2016/43**

(73) Patentinhaber: **tesa SE**
**22848 Norderstedt (DE)**

(72) Erfinder:
- **ZÖLLNER, Stephan**
**21244 Buchholz /Nordheide (DE)**
- **PRENZEL, Alexander**
**22529 Hamburg (DE)**
- **LÜHMANN, Bernd**
**22844 Norderstedt (DE)**
- **PÜTZ, Benjamin**
**22527 Hamburg (DE)**
- **RITTER, Helmut**
**42111 Woppertal (DE)**

(56) Entgegenhaltungen:
**JP-A- S6 383 107    JP-A- S62 212 403**

**Beschreibung**

Die Erfindung betrifft ein Verfahren zur Herstellung von endgruppenfunktionalisierten kurzkettigen Makromolekülen auf Basis von Styrol. Die Makromoleküle weisen an einem Kettenende zur Addition oder Substitution befähigte funktionelle Gruppen auf.

In der chemischen Industrie besteht zunehmend das Interesse an endgruppenfunktionalisierten Makromolekülen mit kontrollierten Funktionalitätsgraden, also möglichst gleicher Anzahl entsprechender Funktionen pro Makromolekül. Solche Makromoleküle können beispielweise zum Aufbau höherer Polymere eingesetzt werden, sind aber auch für eine Vielzahl weiterer Reaktionen nützlich.

Eine Methode zum Aufbau höhermolekularer Polymersysteme ist der Einsatz endgruppenfunktionalisierter Makromoleküle. Solche endgruppenfunktionalisierten kurzkettigen Makromoleküle werden daher auch als Prepolymere bezeichnet. Als Prepolymere eingesetzte Makromoleküle liegen häufig im Molmassenbereich von 500 bis ca. 100 000 g/mol, insbesondere im Bereich 1 000 bis 20 000 g/mol. Der Einsatzbereich dieser Prepolymere ist daher für eine Vielzahl verschiedener Aufbaureaktionen gegeben.

Endgruppenfunktionalisierte Makromoleküle können durch geeignete Herstell- und Polymerisationsverfahren erzeugt werden. Allerdings ist es häufig schwierig, Makromoleküle mit copolymerisierbaren endständigen Gruppen in Polymerisationsreaktionen herzustellen, da die copolymerisierbare Gruppe selbst bereits zur Teilnahme an der Polymerisationsreaktion neigt. Daher kann man den Weg gehen, eine nicht oder schlecht copolymerisierbare endständige funktionale Gruppe der Makromoleküle erst durch eine der Polymerisation nachgelagerte Modifikation in eine polymerisationsfähige, insbesondere eine radikalisch polymerisationsfähigen Endgruppe zu überführen, um Makromoleküle zu erhalten. Prepolymere können durch die endständige funktionelle Gruppe dann zum Beispiel zum Aufbau von Blockcopolymeren eingesetzt werden, oder durch radikalische Copolymerisation von Makromolekülen mit weiteren radikalisch polymerisierbaren Monomeren können beispielsweise Kammcopolymere synthetisiert werden.

Die sog. "lebende" Polymerisation, wie die anionische Polymerisation, eignet sich besonders zum Aufbau von solchen Polymeren mit definiertem Molekulargewicht und Endgruppenfunktionalisierung. Die US 3,842,059 lehrt die Herstellung von Makromolekülen aus Vinylaromaten mit enger Molmassenverteilung und einer funktionalen bzw. polymerisierbaren Endgruppe an nur einem Kettenende. Die anionische Polymerisation findet jedoch industriell weniger Verwendung. Gründe hierfür sind die Kosten und die aufwendige Umsetzung des Verfahrens. Anionisch polymerisierbare Monomere sowie die für die Reaktion benötigten Initiatoren sind meist teurer als Monomere und Initiatoren für eine radikalische Polymerisation. Anionische Polymerisationen erfordern organische Lösungsmittel, die teuer, gesundheits- und umweltschädlich sind. Die anionische Polymerisation ist durch das wachsende Makroanionen ferner empfindlich gegenüber protonenliefernden Verunreinigungen. Kettenabbrechende Verbindungen müssen rigoros ausgeschlossen werden, was allerdings bei industriellen Reaktoren schwer zu erreichen ist.

Eine weitaus kostengünstigere und schnell durchführbare Methode ist die freie radikalische Polymerisation. Großtechnisch hat sie eine vorrangige Stellung, da sie weitestgehend unempfindlich gegenüber Verunreinigungen ist und viele Monomere der radikalischen Polymerisation zugänglich sind. Endgruppenfunktionalisierung von Polymeren mittels freier radikalischer Polymerisation ist durch Verwendung von funktionellen Polymerisationsreglern möglich. Dazu eignen sich unter anderem Halogenalkane oder organische Thiole, welche neben der regelnden Gruppe noch eine weitere funktionelle Gruppe tragen. Durch die Wahl der entsprechenden Regler kann somit die gewünschte Endgruppe an dem Polymer eingeführt werden. Aufgrund ihrer hohen Neigung zur Übertragung bei der radikalischen Polymerisation werden bevorzugt funktionelle organische Thiole verwendet.

Polymerisationsregler (im Rahmen dieser Schrift auch einfach als "Regler" bezeichnet) sind solche Verbindungen, die in der Lage sind, von den Enden der wachsenden Makromoleküle die Radikalfunktionalität zu übernehmen und dann selbst das Wachstum eines neuen Makromoleküls zu beginnen. Das Wachstum des Makromoleküls, dessen Radikalfunktionalität übernommen wurde, wird dadurch beendet. Die Regler sind damit in der Lage, den Polymerisationsgrad der entstehenden Makromoleküle zu begrenzen, ohne die Reaktionskinetik maßgeblich zu beeinflussen. Die Neigung zur Übertragung der Radikalfunktion auf den Polymerisationsregler wird durch die Übertragungskonstante ($C_{tr}$) angegeben (vgl. beispielsweise: J. Brandrup, E.H. Immergut, Polymer Handbook, 4th. Ed., Seiten II/97 bis II/98).

Die funktionellen Thiole findet vor allem Anwendung bei der der Herstellung von endgruppenfunktionalisierten Makromolekülen auf Basis von (Meth)Acrylsäureestern. Dieses Verfahren ist beispielsweise von Boutevin beschrieben (Polymer Bulletin 45, 487-494 (2001)). Die funktionellen Thiole lassen sich hier insbesondere gut einsetzen, da diese bei der radikalischen Polymerisation der (Meth)Acrylsäureester eine Übertragungskonstante von $C_{tr} < 1$ aufweisen. Dadurch ist gewährleistet, dass es bis zu einem vollständigen Umsatz der Monomere zu Übertragungsreaktionen kommen kann, da das Thiol während der Polymerisation nicht vollständig verbraucht wird.

Der Einsatz von Thiolen bei der radikalischen Polymerisation von Vinylaromaten ist hingegen nur mit Einschränkungen möglich. Aufgrund der elektronenreichen Doppelbindung der Monomere nimmt die Übertragungskonstante Werte von weit über 5 an. Durch die hohen Übertragungskonstanten ist das Thiol bereits bei geringen Umsätzen der Monomere verbraucht. So sind im Stand der Technik durch H. M. Jeong et. al. (T. O. Ahn, Y. C. Ha, M.-H. Oh, S.-S.

Lee, S. W. Lee, H. M. Jeong, J. Macromol. Sci., Phys. 1995, B34, 215-229) und K. Kaeriyama (Nippon Kagaku Zasshi 1967, 88, 783-786) Verfahren beschrieben, welche eine Endgruppenfunktionaliserung von Polystyrol mit funktionalen Thiolen mit nur 10 bis 20% Ausbeute realisieren lassen. Aufgrund des schnellen Verbrauchs ist eine Dosierung des Thiols notwendig. Verfahren mit einer Dosierung werden in den Patenten JP63083107A und JP61064705A gelehrt.

Patent JP63083107A beschreibt dabei ein Verfahren zur Herstellung von carboxyl-terminiertem Polystyrol. Die Polymerisation wird in Substanz ohne weitere Zugabe von Lösungsmitteln durchgeführt. Zur Initiierung der Reaktion werden Initiatoren, nämlich Peroxide, eingesetzt, welche Carboxylgruppen tragen. Während der Reaktion werden kontinuierlich sowohl Initiator als auch carboxylfunktionalisierte Thiolregler hinzugegeben. Durch dieses Verfahren sind Prepolymere mit einer Funktionalität von 1,12 und 1,62 erzielbar, wobei die Funktionalität mit steigenden Molmassen größer wird. Die Ausbeuten der Prepolymere liegen hierbei jedoch bei nur ungefähr 50 %.

JP61064705A beschreibt hingegen ein Verfahren zur Herstellung von Styrol-Prepolymeren, welches eine Polymerisation durch den Einsatz von unfunktionellen AzoInitiatoren startet. Über die Reaktionszeit werden dann funktionelle Thiole mit einer konstanten Rate hinzugegeben. Bei diesem Verfahren sind Polymere mit einem Zahlenmittel der Molmasse von 1 000-20 000 g/mol herstellbar. Die Dispersität der Molmassen ($M_w/M_n$) wird dabei mit 1,5 bis 4 angegeben. Ein Funktionalisierungsgrad wird nicht angegeben.

Insbesondere der Grad der Funktionalisierung als auch das Zahlenmittel der Molmasse und die Molmassenverteilung sind wichtige Charakteristika für eine qualitative Bewertung der Makromoleküle, insbesondere in Hinblick auf ihre Eignung als Prepolymere.

Der Grad der Funktionalisierung gibt die "Reinheit" der Prepolymeren wieder. Trägt das Makromolekül genau eine funktionelle Endgruppe, so entspricht dies einem idealen Funktionalisierungsgrad von 1. Dementsprechend ist der Wert 0 bzw. 2, wenn an keinem bzw. an beiden Kettenenden eine funktionelle Gruppe vorhanden ist. Aufgrund von Abbruchreaktionen, im speziellen der Kombinationsabbruch zweier Ketten, ist ein Funktionalisierungsgrad von 1 mittels freier radikalischer Polymerisation schwer realisierbar.

Die Molmasse der Prepolymere hat vor allem Einfluss auf die Reaktivität und die physikalischen Eigenschaften. Ist die mittlere Molmasse (Zahlenmittel) der Prepolymere kleiner als etwa 1 000 g/mol ist, so sind die Blöcke für die Verwendung in Blockcopolymeren zu kurz, als dass sich gewünschte physikalische Eigenschaften wie Mikrophasenseparation manifestieren könnten. Ist das mittlere Zahlenmittel des Molekulargewichts höher als ca. 20 000 g/mol, so vermindert sich die Reaktivität der Endgruppe mit steigender Molmasse, da durch eine stärkere Knäulung der Prepolymere das funktionelle Kettenende sterisch abgeschirmt wird.

In Bezug auf die Molmassenverteilung zeigen Polymere, die durch einen freien radikalischen Polymerisationsprozess gewonnen werden, regelmäßig Polydispersitäten der Molmassen, die deutlich größer sind als die der in lebenden Polymerisationen hergestellten Polymere. Es liegen bei einer solchen breiten Molmassenverteilung von sehr kurzkettigen bis zu langkettigen Makromolekülen Moleküle vieler verschiedener Kettenlängen im Polymer vor. In Bezug auf die oben beschriebenen Eigenschaften der erhaltenen endgruppenfunktonalen Prepolymere hat dies großen Einfluss. Ein Zahlenmittel der Molmasse von 1 000 g/mol bis 20 000 g/mol mit einer möglichst engen Verteilung der Molmassen ist daher erstrebenswert.

Die Herstellungsverfahren mittels freier radikalischer Polymerisation zur Herstellung makromolekularer Vinylaromaten mit einer funktionalen Gruppe am Kettenende, wie sie dem Stand der Technik entnommen werden können, zeigen in Bezug auf Umsatz, Funktionalität und Polydispersität der Molmassen viele Nachteile. Während bei einigen Verfahren Umsätze von nicht einmal 20 % der Monomere erreichbar sind, sind bei anderen Verfahren die Funktionalisierungsgrade der Prepolymere weit größer als 1.

## Aufgabe

Aufgabe der Erfindung ist es, ein industriell kostengünstiges Verfahren zur Herstellung von Makromolekülen mit endständiger Funktionalisierung zur Verfügung zu stellen. Vorteilhaft sollte das Herstellverfahren eine geringe Reaktionsdauer haben. Es wird angestrebt, dass der Funktionalisierungsgrad der Makromonome, also die Zahl der funktionellen Gruppen pro Makromolekül, möglichst nahe an 1 liegt. Sehr bevorzugt sollten die erhaltenen Makromoleküle engverteilt sein.

## Lösung

Die Erfindung betrifft dementsprechend ein Verfahren, welches dazu geeignet ist, endgruppenfunktionalisierte Makromoleküle herzustellen, deren Funktionalitätsgrad - also die gemittelte Zahl der Funktionalisierungen pro Makromolekül - sehr nahe bei 1 liegt Zudem ist das Verfahren geeignet, Makromoleküle mit einer sehr engen Polydispersität herzustellen.

Das erfindungsgemäße Verfahren ist ein solches zur Herstellung von endgruppenfunktionalisierten Makromolekülen - im Folgenden erfindungsgemäß: Oligomeren - auf Basis von Styrol mittels radikalischer Polymerisation, ausgehend von einer Monomermenge umfassend mindestens 90 Mol-% Styrol, wobei

- die Polymerisation selbstinitiierend gestartet wird
- und mittels eines difunktionellen Reglers umfassend die funktionellen Gruppen $R_{F1}$ und $R_{F2}$ geregelt wird, wobei die Gruppe $R_{F1}$ eine unsubstituierte Sulfanylgruppe ist, und wobei die Gruppe $R_{F2}$ des Reglers gewählt wird aus der Gruppe bestehend aus Hydroxygruppen (-OH), Carboxygruppen (-COOH), Estergruppen (-COOR), primären Aminogruppen ($-NH_2$), sekundären Aminen (-NHR, Alkoxysilangruppen ($-Si(OR)_3$)
- wobei eine Bezugsreglermenge $R_B$ derart definiert ist, dass das Stoffmengenverhältnis von Monomeren in der Monomermenge zu Reglermolekülen in der Bezugsreglermenge im Bereich von 100 : 20 bis 100 : 0,5 gewählt wird,

dadurch gekennzeichnet, dass

- die gesamte Monomermenge vorgelegt wird,
- die Vorlage mit dem Monomer nicht mehr als 10 Gew.-% eines Lösemittels enthält,
- der Monomermenge vor Beginn der Reaktion bis zu 5 Gew.-% der Bezugsreglermenge beigegeben wird,
- die Temperatur der Monomermenge derart geregelt wird, dass die Selbstinitiierung der Polymerisation einsetzt,
- wobei die weitere Reglerzugabe zu der Polymerisationsreaktion kontinuierlich oder in diskreten Schritten erfolgt, bis ein Polymerisationsumsatz U(t) von mindestens 0,85 (= 85 %) erreicht ist, und zwar derart, dass jederzeit die folgende Bedingung (I) erfüllt ist:

$$U(t) - 0,05 \leq X_{Reg}(t) \leq U(t) + 0,05 \quad (I)$$

mit

U(t) = Polymerisationsumsatz bis zum Zeitpunkt t
$U(t) = n_{Mon}(t) / n_{Mon,ges}$
$n_{Mon}(t)$ = Stoffmenge der im Verlaufe der Polymerisationsreaktion bis zudem Zeitpunkt t insgesamt umgesetzten Monomere
$n_{Mon,ges}$ = Stoffmenge aller eingesetzten Monomere $n_{Mon,ges}$ (Stoffmengenumsatz)
$X_{Reg}(t)$ = Reglermengenbruchteil $X_{Reg}(t) = R(t) / R_B$
R(t) = bis zum Zeitpunkt (t) insgesamt zugesetzten Reglermenge
$R_B$ = Bezugsreglermenge

Bei der erfindungsgemäß hergestellten Makromolekülmenge wird im Rahmen dieser Schrift von Oligomeren gesprochen. Vorliegend soll der Begriff "Oligomer" lediglich zur sprachlichen Abgrenzung von solchen Polymeren mit hohem mittlerem Molekulargewicht dienen; und es sollen insbesondere Polymere bis zu einem zahlenmittleren Molekulargewicht von bis zu 20 000 g/mol von dem Begriff "Oligomer" umfasst sein.

Als Monomermischung - auch als Eduktmischung - wird die Monomer-Vorlage für die Polymerisation bezeichnet, also die Gesamtheit der eingesetzten Monomere.

Als Reaktionsvorlage oder Ausgangsmischung wird die vor Beginn der Polymerisation vorliegende Mischung aus Ausgangsstoffen (Edukten) und eventuellen weiteren Komponenten, wie ggf. vorhandene Initiatoren, Regler, Beschleuniger oder dergleichen, einschließlich des eventuell vorhandenen Lösemittels bezeichnet.

Als Polymerisationsmischung wird die zu dem jeweiligen Zeitpunkt t im Reaktor befindliche Mischung aus Ausgangsstoffen (Edukten), Zwischen- und Endstoffen (Produkten) der Polymerisation, ggf. vorhandenen weiteren Komponenten und ggf. vorhandenem Lösemittel im Reaktor bezeichnet.

Als Polymerisationsergebnis wird die Polymerisationsmischung nach Beendigung bzw. nach Abbruch der Polymerisation verstanden.

Zahlengenaue Mengenangaben werden als Stoffmengenangaben verstanden.

Gemäß dem erfindungsgemäßen Verfahren wird von einer Monomermischung ausgegangen, die 90 bis 100 Mol-% Styrol umfasst. Sofern die Monomermischung nicht ausschließlich aus Styrolmonomeren zusammengesetzt ist, können als Comonomere solche Monomere gewählt werden, die eine Selbstinitiierung der Polymerisation nicht stören oder verhindern. Insbesondere können als Comonomere bis zu 10 Mol-% anderer Vinylaromaten gewählt werden (also solche Vinylaromaten, die nicht Styrol sind, zum Beispiel Styrolderivate). Als andere Vinylaromaten kommen vor allen Dingen die im Kern alkylierten Derivate des Styrols in Betracht, wie o-Methylstyrol, m-Methylstyrol, p-Methylstyrol, 4-tert-Butylstyrol, 2,4,6-Trimethylstyrol. Aber auch Vinylaromaten wie 4-Vinylanisol, 4-Triflourmethylstyrol, 4-Vinylbiphenyl, 2-Vinylnaphtalen, 9-Vinylanthracene.

In besonders bevorzugter Weise geht man vor, wenn außer Styrol und gegebenenfalls anderen Vinylaromaten keine weiteren Monomere in der Monomermenge vorhanden sind; gegebenenfalls in Anwesenheit von für die Erfindung unwesentlichen Mengen an Verunreinigungen.

Als Regler werden zumindest difunktionelle Regler eingesetzt, die zumindest die funktionellen Gruppen $R_{F1}$ und $R_{F2}$ aufweisen. Dabei ist die Gruppe $R_{F1}$ eine unsubstituierte Sulfanylgruppe, und die Gruppe $R_{F2}$ des Reglers ist gewählt aus der Gruppe bestehend aus Hydroxygruppen (-OH), Carboxygruppen (-COOH), Estergruppen (-COOR), primären Aminogruppen ($-NH_2$), sekundären Aminen (-NHR), Alkoxysilangruppen ($-Si(OR)_3$). Dabei wird die unsubstituierte Sulfanylgruppe zur Regelung der Polymerisationsreaktion genutzt, während die Gruppe $R_{F2}$ sich bei der eigentlichen Polymerisation inert verhält. Sofern die Gruppe $R_{F2}$ eine solche ist, die selbst regelnd wirkt oder zu Nebenreaktionen führen könnte, wird sie vor dem Einsatz des Reglers mit einer Schutzgruppe geschützt. Insbesondere sofern primäre oder sekundäre Amine als funktionelle Gruppen $R_{F2}$ gewählt sind, werden diese Gruppen sehr bevorzugt in geschützter Form eingesetzt, also die entsprechenden Gruppen der Regler vor deren Einsatz mit einer Schutzgruppe versehen.

Es kann ein einzelner Regler oder eine Kombination zweier oder mehrerer Regler der genannten Art eingesetzt werden, wobei sich bei mehr als einem Regler die oben genannte gesamt einzusetzende Reglermenge auf die Gesamtheit aller eingesetzten Regler der erfindungsgemäß bestimmten Art bezieht.

Als Regler können beispielsweise - ohne Anspruch auf Vollständigkeit - die folgenden Substanzen gewählt werden:

2-Mercaptoethanol, 3-Mercaptopropanol, 4-Mercaptobutanol, 5-Mercaptobutanol, 6-Mercaptohexanol, 11-Mercaptoundecanol, 16-Mercaptohexadecanol, 1-Mercapto-2-Propanol, 3-Mercapto-1-propanol, 3-Mercapto-1-Hexanol, 2-Methyl-3-Sulfanylpropionsäure, 4-Mercaptobuttersäure, 6-Mercaptohexansäure, 2-Mercaptopropionsäure, 3-Mercaptopropionsäure, Mercaptoessigsäure, 11-Mercaptoundecansäure, 16-Mercaptohexadecansäure, 2-Aminoethanthiol, 2-Aminoethanthiol Hydrochlorid, 4-Aminothiophenol, 3-Mercaptopropyltriethoxysilan, 3-Mercaptopropylmethyldimethoxysilan.

Besonders hervorragende Regler aus der obigen Liste sind 2-Aminoethanthiol, 2-Mercaptoethanol, 3-Mercaptopropionsäure, 2-Mercaptopropionsäure und 2-Mercaptoessigsäure.

Die Polymerisation wird derart durchgeführt, dass

- die gesamte Monomermenge vorgelegt wird,
- die Polymerisation selbstinitiierend gestartet und mittels des difunktionellen Reglers geregelt wird,
- und die Reglerzugabe zumindest zum Großteil nach einem vorgegebenen Programm erfolgt.

Die Gesamtheit der Monomere wird für die Polymerisation vorgelegt, besonders vorteilhaft in einer Ausgangsmischung, die lösemittelarm ist, also bis maximal 10 Gew-% Lösemittel enthalten kann, oder besonders bevorzugt lösemittelfrei ist.

Erfindungsgemäß wird zumindest ein Teil der Reglermenge nach einem vorgegebenen Programm zugegeben. Es wurde festgestellt, dass die für das Verfahren günstig zu wählende Reglermenge abhängig ist von der Menge der eingesetzten Monomere und dass durch die Menge des gewählten Reglers das schließlich vorliegende mittlere Molekulargewicht der erhaltenen Oligomere, also deren Polymerisationsgrad, gesteuert werden kann. Die vorgewählte Reglermenge wird im Folgenden als <u>Bezugsreglermenge</u> $R_B$ bezeichnet. Als Bezugsreglermenge $R_B$ kann die Reglermenge verstanden werden, die für einen hundertprozentigen Monomerumsatz als optimal angesehen würde, um ein bestimmtes mittleres Molekulargewicht der Oligomere zu erzielen, ohne sich durch diese Interpretation unnötig beschränken zu wollen.

In dem hier beschriebenen Verfahren kann durch die eingesetzte Menge des thiolischen Reglers somit die Molmasse der herzustellenden Oligomere beeinflusst werden. Ein Verhältnis von Monomer zu Regler von 5:1 führt zu Oligomeren mit einer mittleren Molmasse von etwa $M_n$=1 000 g/mol. Mit einem eingesetzten Verhältnis von 200:1 wird eine mittlere Molmasse im Bereich von $M_n$=20 000 g/mol realisiert.

Die Bezugsreglermenge $R_B$ wird bevorzugt derart gewählt, dass das Verhältnis der Stoffmenge der Monomere in der Monomermischung - also der Stoffmenge der insgesamt eingesetzten Monomeren - zur Stoffmenge an Reglermolekülen in der Bezugsreglermenge im Bereich von 100 : 20 bis 100 : 0,5 (also im Bereich von 5 : 1 bis 200 : 1) liegt . In einer besonders bevorzugten Verfahrensführung wird die Reglermenge so gewählt, dass das Stoffmengenverhältnis von Monomeren in der Monomermischung zu Reglermolekülen der Bezugsreglermenge zwischen 100 : 10 und 100 : 0,5 beträgt, dass also die Monomere in einem zehn- bis 200fachen Überschuss, bezogen auf die Reglermoleküle der Bezugsreglermenge, vorliegen.

Vor Beginn der Polymerisation ist der Ausgangsmischung sehr bevorzugt bereits Regler zugesetzt (im Folgenden als "initial eingesetzte Reglermenge" bezeichnet), und zwar insbesondere in einer Menge von bis zu 5 Mol.-%,

bezogen auf die Bezugsreglermenge, vorteilhaft zwischen 1 und 5 Mol.-%.

Zum Start der Polymerisation wird die Temperatur der Ausgangsmischung derart geregelt, dass die Selbstinitiierung der Polymerisation durch das Styrol einsetzt. In sehr bevorzugter Vorgehensweise wird die Polymerisationsmischung hierzu auf eine Temperatur von mindestens 100 °C, bevorzugt von mindestens 120 °C, erwärmt.

Die freie radikalische Polymerisation wird bevorzugt bei Temperaturen im Bereich von 100 °C bis 145 °C, sehr bevorzugt im Bereich von 120 °C bis 145 °C, durchgeführt. In diesem Temperaturbereich findet die Selbstinitiierung statt, und es kann lösemittelarm, insbesondere lösemittelfrei, gearbeitet werden. Insbesondere bei Temperaturen um 145 °C kann unter Rückfluss des Monomeren gearbeitet werden. Polystyrol hat eine Glasübergangstemperatur von 100 °C; im Molmassenbereich von kleiner 20 000 g/mol liegt die Glasübergangstemperatur unterhalb von 100 °C. Die Reaktionstemperaturen des Verfahrens erlauben somit eine lösungsmittelarme, insbesondere lösungsmittelfreie Polymerisation, da zunächst das Monomer selbst als Lösungsmittel dient und bei hohen Umsätzen das Polymer oberhalb der Glastemperatur noch fließfähig ist.

Sehr bevorzugt wird somit bei einem Zustand oberhalb der Fließtemperatur $T_f$ der Polymerisationsmischung gearbeitet, also bei einem Zustand hinreichender Fließfähigkeit, in dem bei der gewählten Temperatur die Viskosität des Systems soweit erniedrigt ist, dass eine homogene Verarbeitung in den Reaktoren auch ohne die Anwesenheit von Lösemitteln erfolgen kann. Unter einem Zustand hinreichender Fließfähigkeit wird vorliegend insbesondere ein solcher Aggregatzustand des betreffenden Polymers verstanden, bei dem man sich bei Temperaturen oberhalb der Glastemperatur $T_G$ des Polymers und oberhalb derjenigen Temperatur $T_{min}$ befindet, bei der die innere Dämpfung, ausgedrückt durch den Verlustfaktor tan $\delta$, im gummielastischen Zustand ein Minimum aufweist; bei dem weiterhin tan $\delta \geq 1$ ist (also der viskose Anteil überwiegt) und bei dem die Viskosität, ausgedrückt durch den komplexen Viskositätskoeffizienten $\eta^*$, bei $\eta^* \leq 12\ 000$ Pas liegt; bevorzugt bei $\eta^* \leq 10\ 000$ Pas.

Angaben zur Glasübergangstemperatur $T_G$ beziehen sich auf den mittels Dynamischer Differenzkalorimetrie bestimmbaren Glasumwandlungstemperatur-Wert Tg (Hälfte der Änderung der spezifischen Wärmekapazität) nach DIN 53765:1994-03, sofern im Einzelfall nichts anderes angegeben ist.

Die komplexe Viskosität $\eta^*$ sowie der Verlustfaktor tan $\delta$ lassen sich bestimmen mittels Dynamisch Mechanischer Analyse (DMA), insbesondere nach DIN EN ISO 6721-2:2008-09; die Zahlenangaben in dieser Schrift beziehen sich auf die deformationsgesteuerte dynamische Messung des nichtvernetzten Systems im viskolinearen Bereich; mit einer Oszillationsfrequenz von 10 rad/s und einer Deformation von 1 %.

Die genannten bevorzugten Verfahrensführungen bieten daher den Vorteil, dass es möglich ist, auf Lösungsmittel zu verzichten (also nur in Anwesenheit von Monomer und Regler zu arbeiten) bzw. die Menge an Lösungsmittel gering zu halten, so dass nach der Polymerisation für ein lösungsmittelfreies System keine gesonderte Aufkonzentration notwendig ist. So ist das Verfahren ein sehr effizientes und bezogen auf den Einsatz von Rohstoffen ein sehr kostengünstiges Verfahren.

Nach Beginn der Polymerisationsreaktion erfolgt die weitere Reglerzugabe zu der Polymerisationsreaktion derart, dass zumindest bis zur Erreichung eines Polymerisationsumsatzes von 85 % jederzeit die folgende Bedingung (I) erfüllt ist:

$$U(t) - 0{,}05 \leq X_{Reg}(t) \leq U(t) + 0{,}05 \qquad (I)$$

wobei

$U(t)$ = Polymerisationsumsatz bis zum Zeitpunkt t
$X_{Reg}(t)$ = Reglermengenbruchteil aus der zum Zeitpunkt (t) insgesamt zugesetzten Reglermenge R(t) bezogen auf die Bezugsreglermenge $R_B$

Der Polymerisationsumsatz, bis zu dem die Formel (I) mindestens erfüllt werden soll, wird zu Bezugszwecken im Folgenden als "Mindestumsatz $U_M$" bezeichnet.

Im Rahmen dieser Schrift sind Umsatzangaben wie üblich bezogen auf den Stoffumsatz, also auf den Bruchteil der insgesamt umgesetzten Moleküle bezogen auf alle eingesetzten Moleküle (vgl. entsprechend Definition im Römpp Online 2013; Dokumentkennung RD-21-00290).

Der bisherige Polymerisationsumsatz U(t) - also der Polymerisationsumsatz bis zu einem Zeitpunkt t - ist der Bruchteil aus der Stoffmenge der im Verlaufe der Polymerisationsreaktion bis zu dem Zeitpunkt t insgesamt umgesetzten Monomere $n_{Mon}(t)$, bezogen auf die Stoffmenge aller eingesetzte Monomere $n_{Mon,ges}$ [$U(t) = n_{Mon}(t) / n_{Mon,ges}$]. Die Reglerzugabe wird somit derart gesteuert, dass zu jedem Zeitpunkt t der Wert des bis zu diesem Zeitpunkt zugesetzten Reglermengenbruchteils um nicht mehr als 0,05 (also um nicht mehr als 5 Prozentpunkte) unter und um nicht mehr als 0,05 (also um nicht mehr als 5 Prozentpunkte) über dem Wert des jeweiligen Polymerisationsumsatzes U(t) zu diesem Zeitpunkt t liegt.

Der zum Zeitpunkt t zugesetzte Reglermengenbruchteil $X_{Reg}(t)$ ist der Bruchteil aus der bis zum Zeitpunkt (t) insgesamt zugesetzten Regler-Stoffmenge $R(t)$, bezogen auf die Bezugsreglermenge $R_B$, als Angabe in Molprozent $[X_{Reg}(t) = R(t) / R_B]$. Die bis zu einem Zeitpunkt t insgesamt zugesetzte Reglermenge $R(t)$ - also die zu dem Zeitpunkt t in der Polymerisationsmischung insgesamt vorliegende Reglermenge - umfasst die initial eingesetzte Reglermenge.

Besonders bevorzugt geht man so vor, dass die Reglerzugabe bis zu dem Mindestumsatz UM so gesteuert wird, dass zu jedem Zeitpunkt t der Wert des bis zu diesem Zeitpunkt zugesetzten Reglermengenbruchteils um nicht mehr als 0,02 (also um nicht mehr als 2 Prozentpunkte) unter und um nicht mehr als 0,02 (also um nicht mehr als 2 Prozentpunkte) über dem Wert des jeweiligen Polymerisationsumsatzes $U(t)$ zu diesem Zeitpunkt t beträgt; also

$$U(t) - 0,02 \leq X_{Reg}(t) \leq U(t) + 0,02 \qquad (Ia)$$

Damit lässt sich die Polydispersität weiter verringern; die Molmassenverteilung wird noch enger als im Falle eines höheren Reglermengenbruchteils.

Dabei ist zu beachten, dass die initial bereits zugesetzte Reglermenge (also die vor Beginn der Selbstinitiierung bereits zugesetzte Reglermenge) dann nicht höher als 2 % der Bezugsreglermenge, insbesondere zwischen 1 % und 2 % der Bezugsreglermenge, liegen sollte.

Die Zugabe des Reglers gemäß der Formeln (I) und (Ia) kann regelmäßig oder unregelmäßig erfolgen, solange die Bedingung erfüllt ist. Eine regelmäßige Zugabe ist beispielsweise der ununterbrochene kontinuierliche Zufluss des Reglers mit konstanter Zuflussgeschwindigkeit (in mol pro Zeiteinheit) oder die wiederholte Zugabe in diskreten Schritten bei konstanter Reglermenge pro Zugabeschritt und in konstanten Zeitintervallen (nicht flüssige Regler können gelöst in etwas Lösungsmittel oder besser in geschmolzener Form zugegeben werden). Die Zugabe kann aber beispielsweise auch mit sich ändernder Zuflussgeschwindigkeit (also variierender Reglermenge pro Zeiteinheit) oder in diskreten Schritten erfolgen, bei denen die jeweils zugegebene Reglermenge und/oder die Zeitintervalle zwischen der Zugabeschritten variiert werden. Der noch zuzusetzende Regler wird während der Polymerisation also in Abhängigkeit von dem Polymerisationsfortschritt eingebracht. Die Zugabe erfolgt in dem betreffenden Umsatzfenster derart, dass die zugegebene Reglermenge zu jedem Zeitpunkt t der Formeln (I) bzw. (Ia) genügt, wie sie vorstehend angegeben ist. Besonders bevorzugt wird der Polymerisationsumsatz hierzu permanent oder in wiederholten Schritten ermittelt. Der Polymerisationsumsatz lässt sich dabei online überwachen. Online-Kontrollen des Polymerisationsumsatzes können durch Anwendung von nah-Infrarot-Spektroskopie erfolgen und sind bekannt, vergleiche beispielsweise "On-line Determination of the Conversion in a Styrene Bulk Polymerization Batch Reactor using Near-Infrared Spectroscopy"; Journal of Applied Polymer Science, Volume 84 (2002), Issue 1, Seiten 90-98.; Die dort geschilderte Methode wird vorteilhaft für das erfindungsgemäße Verfahren angewandt. Eine Übersicht über weitere Verfahren zur Online-Bestimmung des Polymerisationsumsatzes findet sich in "Recent Developments in Hardware Sensors for the On-Line Monitoring of Polymerization Reactions", J.M.S.-Rev. Macromol. Chem Phys., C39(1), 57-134 (1999).

Die Abweichung bei solchen On-Line-Polymerisationsumsatz-Bestimmungen liegt dabei bei unter 0,5 %. Die Zahlenangaben der Formel (I) und (Ia) beziehen sich daher insbesondere auf eine solche Genauigkeit von $\pm$ 0,005.

Alternativ kann der Polymerisationsumsatz durch Probennahme zu den entsprechenden Zeitpunkten und Analyse der entnommenen Probe nach bekannten Verfahren bestimmt werden.

Da die Zugabe des Reglers zur Einhaltung der oben genannten Bedingung (I) bzw. (Ia) nicht in einem einzelnen Schritt zu Beginn der Reaktion, sondern durch Zugabe von Teilmengen des Reglers mit der Zeit verläuft, kann erreicht werden, dass die Reglerkonzentration in der Polymerisationsmischung nicht zu Anfang sehr hoch ist und dann kontinuierlich abnimmt, sondern dass die Reglermenge zu Beginn der Reaktion gering ist, aber dafür bis zu einem fortgeschrittenen Polymerisationsstadium auf einem bestimmten Niveau in der Polymerisationslösung gehalten wird.

Als eine sehr bevorzugte Methode hat es sich herausgestellt, wenn die Reglerzugabe kontinuierlich mit an den Monomerumsatzverlauf veränderlich angepasstem Zufluss des Reglers erfolgt.

Als eine weitere bevorzugte Methode hat es sich herausgestellt, wenn in diskreter Zugabeweise nach jeweils identischem Monomerverbrauch (also bei jeweils identischer Änderung des Polymerisationsumsatzes) jeweils identische Reglermengen zugegeben werden. Als besonders bevorzugt wird die Reglerzugabe kontinuierlich durchgeführt, mit einem mengenbezogen konstanten Reglerzufluss.

Besonders gute Ergebnisse in Hinblick auf ein gewünschtes mittleres Molekulargewicht und eine enge Polydispersität erhält man, wenn die Bedingung nach Formel (I) bzw. (Ia) bis zu einem Polymerisationsumsatz, also einem Mindestumsatz UM für die Anwendung der Formeln (I) bzw. (Ia), von mindestens 90 Mol-%, besser bis zu einem Polymerisationsumsatz, also einem Mindestumsatz UM, von mindestens 95 Mol-%, noch besser bis zu einem Polymerisationsumsatz, also einem Mindestumsatz UM, von mindestens 98 Mol-%, erfüllt ist, die Reglerzugabe also auch bei hohen Polymerisationsumsätzen unter Beachtung der Bedingung nach Formel (I) bzw. (Ia) durchgeführt wird.

Die Polymerisation kann mit dem Erreichen des Mindestumsatzes UM für die Anwendung der Formel (I) bzw. (Ia) abgebrochen werden, sie kann aber vorteilhaft auch nach Erreichen dieses Mindestumsatzes UM noch weiter bis zu höheren Polymerisationsumsätzen geführt werden. Es hat sich gezeigt, dass man hervorragende Ergebnisse erzielt, wenn die Reglerzugabe nach Formel (I) erfolgt, bis die Polymerisation bis zu dem Mindestumsatz UM für die Anwendung von Formel (I) (mindestens 85 %, bevorzugt 90 %, mehr bevorzugt 95 %, äußerst bevorzugt 98 %; siehe vorstehend) erfolgt ist, auch wenn man nach Erreichen des Mindestumsatz UM bei der Zugabe der restlichen Reglermenge von der Formel (I) bzw. (Ia) abweicht - wenn also anschließend die verbleibende zuzusetzende Reglermenge in Abweichung von Formel (I) bzw. (Ia)nicht mehr (insbesondere bei bereits hohen Polymerisationsumsätzen) oder ganz oder teilweise einmalig, kontinuierlich oder periodisch zugesetzt wird. Vorteilhaft sollte bei Beendigung der Reaktion mindestens 90 % des Reglers, bezogen auf die Bezugsreglermenge, zu der Polymerisationsmischung zugesetzt sein, sehr bevorzugt mindestens 99 %. Vorteilhaft wird bis zur Beendigung der Polymerisation eine Reglermenge in Höhe der Bezugsreglermenge vollständig zugesetzt. Eine vollständige bzw. weitgehend vollständige Reglerzugabe begünstigt die Genauigkeit des angestrebten mittleren Molekulargewichts der Oligomere, kann aber andererseits bei nicht vollständiger Abreaktion des Reglers zu Reglerresten im Oligomer führen.

Die Polymerisationsreaktion kann beispielsweise beendet werden, indem die Temperatur unter die Selbstinitiierungstemperatur des Styrols abgesenkt wird. Je nach der Glasübergangstemperatur des erhaltenen Oligomeren, die teilweise nur wenig unter dieser Selbstinitiierungstemperatur liegt, kann es dabei vorteilhaft sein, die Polymerisationsmischung zuvor in noch fließfähigem Zustand aus dem Reaktor abzulassen, damit es nicht zum Erstarren im Reaktor kommt.

Die nach dem erfindungsgemäßen Verfahren erhältlichen Oligomere können hervorragend als Prepolymere für die Synthese höhermolekularer Polymere eingesetzt werden. Als Prepolymere werden insbesondere solche Vor- oder Zwischenprodukte der Polymerherstellung verstanden, die noch löslich und plastisch verarbeitbar sind.

Überaschenderweise wurde festgestellt, dass eine Initiierung der Polymerisation durch eine thermische Selbstinitiierung von Styrol - insbesondere bei Beachtung der übrigen Verfahrensparameter - deutliche Vorteile in Bezug auf den Funktionalisierungsgrad der funktionalisierten Oligomere hat. Dieser Funktionalisierungsgrad liegt zwischen 1 und 1,2, das heißt im Mittel hat jedes der Oligomere 1 bis 1,2 funktionelle Gruppen, wobei insbesondere vorteilhaft mindestens 98 %, bevorzugt mindestens 99,5 % der Ketten mindestens eine funktionelle Gruppe tragen.

Dabei wurde festgestellt, dass bei Oligomeren mit niedrigeren mittleren Molmassen sogar noch etwas bessere Werte erreicht werden konnten als bei den Oligomeren mit etwas höheren mittleren Molekulargewichten. So konnten bei Oligomeren mit zahlenmittleren Molekulargewichten von nicht mehr als 20 000 g/mol regelmäßig Funktionalisierungsgrade von nicht mehr als 1,2 und bei Oligomeren mit zahlenmittleren Molekulargewichten von nicht mehr als 10 000 g/mol sogar regelmäßig Funktionalisierungsgrade von nicht mehr als 1,1 erzielt werden.

Der Funktionalisierungsgrad f wird ermittelt durch einen Vergleich der durch zwei unterschiedliche Methoden ermittelten mittleren Molmasse $M_n$. Zunächst wird das Zahlenmittel der Molmasse $M_n$ durch Gelpermeationschromatographie (GPC) bestimmt. Anschließend erfolgt eine Bestimmung der Molmasse durch eine Äquivalenzmethode. Für die Ermittlung der Molmasse mittels einer Äquivalenzmethode wird angenommen, dass ausschließlich eine funktionelle Gruppe pro Polymerkette vorhanden ist. Zum einen kann man sich der $^1$H-NMR-Spektroskopie bedienen. Liegen die Signale der durch das Thiol gegebenen Endgruppe isoliert zu Signalen der Wiederholungseinheiten des Polymers vor, können diese jeweils integriert werden, um daraus die Molmasse $M_n$ zu ermitteln. Zum anderen kann eine Bestimmung der Molmasse durch Titration der Endgruppe erfolgen. Mittels des eingewogenen Polymers und der ermittelten Anzahl der funktionellen Endgruppen wird die mittlere Molmasse $M_n$ bestimmt.

Durch Division der beiden ermittelten mittleren Molmassen $M_n$ ergibt sich die Funktionalität f:

$$f = \frac{\text{Molmasse Mn bestimmt durch GPC}}{Molmasse\ Mn\ bestimmt\ durch\ \ddot{A}quivalenzmethode}$$

Bei Polymerisationen gemäß dem Stand der Technik, bei denen thermisch spaltbare Polymerisationsinitiatoren wie etwa Azoverbindungen oder Peroxid-Verbindungen eingesetzt werden, werden die Initiatoren-Radikale gebildet, die die Polymerisation starten, bevor es zur Übertragung zum Thiol kommt. Beim Einsatz von nicht funktionellen Initiatoren, wie Azo-bis-(isobutyronitril) (AIBN), treten nichtfunktionalisierte Ketten als Nebenprodukt auf, wodurch der Funktionalisierungsgrad herabgesetzt wird.

Durch den Einsatz der im Stand der Technik gewählten funktionalisierten Initiatoren ist hingegen zu beobachten, dass der Funktionalisierungsgrad gegen 2 geht.

Der funktionelle Regler wird in diesem beschriebenen Verfahren während der Polymerisation zur Reaktion hinzugegeben. Dabei werden bis zu 5 Mol-% der Bezugsreglermenge (bei Anwendung der Formel (Ia) bis zu 2 Mol-%) vor der Polymerisation hinzugegeben und die restliche Menge während der Polymerisation zum Reaktionsgemisch dosiert.

Bewegt man sich bei der Reglerzugabe im Rahmen der Formel (I), noch besser im Rahmen der Formel (Ia), so lassen sich sehr engverteilte Oligomere erhalten. Je nach zahlenmittlerem Molekulargewicht der erhaltenen Oligomere lassen sich Polydispersitäten (Polydispersität D = gewichtsmittleres Molekulargewicht $M_w$ / zahlenmittleres Molekulargewicht $M_n$) von weniger als 2,5 (insbesondere für Oligomere mit einem zahlenmittleren Molekulargewicht von weniger als 20 000 g/mol), von weniger als 1,9 (insbesondere für Oligomere mit einem zahlenmittleren Molekulargewicht von weniger als 10 000 g/mol) und sogar von weniger als 1,4 (insbesondere für Oligomere mit einem zahlenmittleren Molekulargewicht von weniger als 1 500 g/mol) erhalten. Bei Abweichungen der Dosierungsrate von der geregelten Zugabe sind wesentliche Verbreiterungen der Molmassenverteilung festzustellen.

Für den Fachmann nicht vorhersehbar konnte zudem durch die Anwendung der thermischen Selbstinitiierung von Styrol für das erfindungsgemäße Verfahren erreicht werden, dass keine konkurrierenden Nebenprodukte festgestellt wurden.

Falls dies erforderlich oder gewünscht ist, kann eine Aufreinigung des Polymerisationsprodukts durchgeführt werden, insbesondere indem nicht umgesetzte Monomere wie nicht umgesetztes Styrol oder anderer Vinylaromaten, zum Beispiel Styrolderivate, und/oder Zwischen- und/oder Nebenprodukte und/oder Reglerreste aus dem Polymerisationsprodukt entfernt werden.

Mit dem erfindungsgemäßen Verfahren ist es gelungen, wohldefinierte Oligomere zu erhalten, die mit funktionellen Gruppen bei engem Funktionalisierungsgrad endständig ausgerüstet werden können. Die endständige Position der Gruppen $R_{F2}$ ergibt sich dabei über das Wachstum der Oligomerkette an dem mit einer Radikalfunktion versehenen Reglermolekül. Endständig im Sinne der vorliegenden Anmeldung sind also insbesondere alle funktionellen Gruppen, die sich an dem aus dem Reglermolekül verbleibenden Endbaustein des Oligomers befinden. Hat das Reglermolekül eine Kohlenwasserstoffkette als Gerüst, bei der die funktionelle Gruppe $R_{F2}$ sich an einem End-Kohlenstoff-Atom befindet, so steht die funktionelle Gruppe auch im Oligomer "absolut" endständig, also an einem End-Kohlenstoff-Atom. Wie vorstehend beschrieben weisen die Oligomere insbesondere ein wohldefiniertes Molekulargewicht, eine geringe Polydispersität und einen nahe bei 1 liegenden Funktionalitätsgrad auf.

Diese endständig funktionalisierten Oligomere können hervorragend dazu genutzt werden, um über die Gruppe $R_{F2}$ andere Funktionen $R_{F4}$ an endständiger Position in die Oligomere einzuführen, insbesondere solche, die im Rahmen der Polymerisation - etwa wegen ihrer hohen Empfindlichkeit oder Reaktionsfreudigkeit - nicht, und/oder nicht in hinreichender Qualität und/oder nicht mit hinreichender Selektivität und/oder nicht an gewünschter Position in die Oligomere eingebracht werden könnten, beispielsweise weil sie ihre Natur bei der Polymerisation verändern würden. Eine Vielzahl solcher funktionellen Gruppe, die in die Oligomere eingeführt werden können, ist denkbar. Solche anderen funktionellen Gruppen $R_{F4}$ können beispielsweise insbesondere Kohlenstoff-Kohlenstoff-Doppelbindungen sein - im Folgenden auch als olefinische Doppelbindungen bezeichnet.

Um die erfindungsgemäß erhaltenen Oligomere mit anderen Funktionen $R_{F4}$ - insbesondere mit olefinischen Doppelbindungen - auszurüsten, werden diese in einer vorteilhaften Weiterentwicklung des erfindungsgemäßen Verfahrens in einem nachfolgenden Verfahrensschritt mit zumindest einer Verbindung Z umgesetzt, wobei die Verbindung Z zumindest eine funktionelle Gruppe $R_{F3}$ und zumindest eine funktionelle Gruppe $R_{F4}$ - insbesondere eine olefinische Doppelbindung - aufweist. Die Umsetzung kann insbesondere durch eine Kopplungsreaktion wie eine Additions- oder Substitutionsreaktion, erfolgen. Sofern die Gruppen $R_{F2}$ (also die am Oligomer befindlichen Gruppen) geschützt vorliegen, wird bevorzugt zunächst die Schutzgruppe entfernt, damit die Kopplungsreaktion durchgeführt werden kann.

Die Kopplungsreaktion kann insbesondere durch Reaktion der - ggf. entschützten - funktionellen Gruppe $R_{F2}$ mit einer funktionellen Gruppe $R_{F3}$ einer Verbindung Z stattfinden, wobei die funktionelle Gruppe $R_{F3}$ so gewählt ist, dass sie zu Additions- oder Substitutionsreaktionen mit der funktionellen Gruppe $R_{F2}$ hervorragend geeignet ist. Die Verbindung Z wird so gewählt, dass sie außer derfunktionellen Gruppe $R_{F3}$ noch zumindest eine funktionelle Gruppe $R_{F4}$ - insbesondere eine olefinisch ungesättigte Doppelbindung - aufweist, wobei durch die Kopplungsreaktion zumindest der die funktionelle Gruppe $R_{F4}$ - insbesondere die olefinische Doppelbindung - enthaltende Teil der Verbindung Z an die Oligomere angeknüpft wird.

Besonders bevorzugt wird die Verbindung Z gewählt aus der Liste bestehend aus Acrylsäure, Methacrylsäure, Acrylsäureestern, Methacrylsäureestern, Acrylsäureanhydriden, Methacrylsäureanhydriden, Glycidylacrylat, Glycidylmethacrylat, Maleinsäureanhydrid, Acrylsäurechlorid, Methacrylsäurechlorid, 2-Isocyanatoethylacrylat, 2-Isocyanatoethyl-methacrylat, 4-Chlormethylstyrol, Itaconsäureanhydrid, 3,4-Epoxycyclohexylmethylacrylat und Epoxycyclohexylmethylmethacrylat..

Besitzt die Verbindung Z eine Kohlenwasserstoffkette als Gerüst und befindet sich die funktionelle Gruppe $R_{F4}$ an einem End-C-Atom dieser Kohlenwasserstoffkette - ist die Gruppe $R_{F4}$, insbesondere eine an ein End-C-Atom angrenzende olefinische Doppelbindung -, so wird die funktionelle Gruppe $R_{F4}$ auch nach der Einführung in das Oligomer an einem End-C-Atom des (so modifizierten) umfunktionalisierten Oligomers liegen.

In einer bevorzugten Verfahrensweise wird die Reaktion der Gruppe $R_{F2}$ mit der funktionellen Gruppe $R_{F3}$ bei einer Temperatur von mindestens 100 °C durchgeführt. Besonders bevorzugt kann man derart vorgehen, dass die Reaktion der Gruppe $R_{F2}$ mit der funktionellen Gruppe $R_{F3}$ in demselben Reaktor durchgeführt wird, indem bereits die Polymerisation stattgefunden hat.

Falls dies erforderlich oder gewünscht ist, kann eine Aufreinigung des Umsetzungsprodukts durchgeführt werden.

Makromoleküle, die mit einer Doppelbindung funktionalisiert sind, sind als Comonomere - auch als "Makromonomere" bezeichnet - interessant. Diese können in Polymerisationsreaktionen ihrerseits als Monomere dienen. Auf diese Weise lassen sich zum Beispiel Blockcopolymere herstellen. Auf einfache Art sind so auch Kammpolymere erhältlich.

Durch herkömmliche Polymerisation lassen sich insbesondere solche mit olefinischen Doppelbindungen endständig, d.h. mit einer Doppelbindung zwischen dem letzten und vorletzten C-Atom der jeweiligen Molekülkette, ausgerüsteten Makromoleküle nicht zufriedenstellend erhalten, da die Doppelbindungen im Rahmen der Polymerisation reagieren und somit keine endständigen Doppelbindungen gezielt im erhaltenen Makromolekül eingebaut werden könnten. Weiterhin ist es schwierig, die Makromoleküle derart herzustellen, dass ihre Funktionalität gegen 1 geht - also im Mittel eine Doppelbindung pro Makromolekül vorhanden ist - und dass sie engverteilt sind, also eine niedrige Polydispersität aufweisen. Engverteilte Makromoleküle sind insbesondere dann nützlich, wenn alle Seitenketten der Kammpolymere im Wesentlichen die gleiche Länge haben sollen.

Makromoleküle, die die vorgenannten Anforderungen erfüllen, lassen sich durch das erfindungsgemäße Verfahren erhalten. Gegenstand der Erfindung sind daher Oligomere, wie sie nach dem erfindungsgemäßen Verfahren erhältlich sind. Hiervon umfasst sind insbesondere endgruppenfunktionalisierte Oligomere, besonders solche, wie sie im Rahmen dieser Schrift dargestellt sind, ganz besonders umfunktionalisierte Oligomere, die durch weitere Umsetzung des erhaltenen Oligomers mit zumindest einer Verbindung Z erhalten werden, insbesondere solche, die jeweils endständig eine olefinische Doppelbindung tragen.

Die erfindungsgemäßen Oligomere sind insbesondere solche auf Polystyrolbasis, die ein zahlenmittleres Molekulargewicht im Bereich von 1 000 g/mol bis 20 000 g/mol, insbesondere bis 10 000 g/mol, aufweisen und/oder deren Polydispersität nicht größer als 2,5, bevorzugt nicht größer als 2,0, sehr bevorzugt nicht größer als 1,5 ist, und/oder die einen Funktionalisierungsgrad zwischen 1 und 1,2 besitzen, wobei insbesondere vorteilhaft mindestens 98 %, bevorzugt mindestens 99,5 % der Ketten mindestens eine funktionelle Gruppe tragen.

Folgende Oligomere seien explizit genannt:

○ solche mit einem zahlenmittleren Molekulargewicht zwischen 1 000 g/mol und 20 000 g/mol und einer Polydispersität von nicht mehr als 2,5 und einem Funktionalisierungsgrad zwischen 1 und 1,2, wobei mindestens 98 % der Ketten mindestens eine funktionelle Gruppe tragen,

o solche mit einem zahlenmittleren Molekulargewicht zwischen 1 000 g/mol und 10 000 g/mol und einer Polydispersität von nicht mehr als 2,5 und einem Funktionalisierungsgrad zwischen 1 und 1,2, wobei mindestens 98 % der Ketten mindestens eine funktionelle Gruppe tragen,

o solche umfunktionalisierten Oligomere mit einem zahlenmittleren Molekulargewicht zwischen 1 000 g/mol und 20 000 g/mol und einer Polydispersität von nicht mehr als 2,5 und einem Funktionalisierungsgrad zwischen 1 und 1,2, wobei mindestens 98 % der Ketten mindestens eine endständige Doppelbindung als funktionelle Gruppe tragen.

## Beispiele

Die Erfindung wird im Folgenden anhand von Beispielen näher erläutert. Dabei kommen neben den bereits vorstehend beschriebenen Testmethoden die folgenden Methoden zur Anwendung:

## Methoden

Molmassenbestimmung mittels **Gel-Permeations-Chromatographie** wurde unter Verwendung von THF (HPLC Grade, unstabilisiert - Biosolve Kat.Nr. 202220602) als Laufmittel, bei Raumtemperatur und mit einer Flussrate von 1 ml/min durchgeführt. Das GPC-System besteht aus einer Pumpe der Firma FLOW, Modell Intelligent Pump AL-12, einem Probensampler der Firma Schambeck SFD, Modell S5200, und einer Säulenkombination der Firma MZ Analysentechnik GmbH. Der Pumpe ist ein Degasser der Firma Schambeck, Typ Gastorr BG 12 vorgeschaltet. Die Säulenkombination besteht aus einer Vorsäule der Porösität 100Å sowie drei Hauptsäulen, welche Porositäten von 10 000, 1000 und 100Å aufweisen und ein Styrol-Divinylbenzol-Copolymer beinhalten (Typ Gel Sd plus). Als Detektoren dienen ein Waters 486 Turnable Absorbance Detector und ein Schambeck SFD RI 2000 Differential Refraktometer, die in Reihe geschaltet sind. Die Kalibrierung erfolgt mit Polystyrol-Standards im Bereich von 575 bis 3.114 000 g/mol. Als interner Standard wird Toluol den Proben zugesetzt.

**300 MHz $^1$H-NMR-spektroskopische** Messungen wurden mit einem Bruker Advance DRX 300 NMR-Spektrometer bei Raumtemperatur aufgenommen.

**Beispiel 1**

Ausgangsverbindungen und Mengen

|  | Monomer | Regler |
|---|---|---|
|  | Styrol | 2-Mercaptoethanol |
| Menge | 200 g (1,92 mol) | 3g (0,038 mol) |
| Molares Verhältnis | 50 | 1 |

Styrol und 2-Mercaptoethanol werden in einem molaren Verhältnis von 50:1 eingesetzt. In einem 500 ml Laborreaktor werden 200 g Styrol und 3 Mol.-% des Reglers vorgelegt, und der Reaktor wird mit Stickstoff inertisiert. Das Reaktionsgemisch wird auf eine Innentemperatur von 145°C bis zum Rückfluss des Monomers erwärmt und während der gesamten Reaktion bei dieser Temperatur gehalten. Der Umsatz des Styrols wird während der gesamten Reaktion überprüft. Die Zugabe des 2-Mercaptoethanol erfolgt kontinuierlich, wobei die prozentuale molare Gesamtmenge des zugegebenen Reglers nicht mehr als 5% des prozentualen molaren Gesamtumsatzes des Monomers abweicht. Die Polymerisation wird bis zu einem Monomerumsatz von 97% durchgeführt.

Es wird ein Prepolymer mit einer Molmasse von $M_n$= 5030 g/mol mit $M_w/M_n$= 1,7 erhalten. Die Funktionalität beträgt 1,04.

**Beispiel 2**

Ausgangsverbindungen und Mengen

|  | Monomer | Regler |
|---|---|---|
|  | Styrol | 2-Mercaptoethanol |
| Menge | 200 g (1,92 mol) | 0,75 g (0,0096 mol) |
| Molares Verhältnis | 200 | 1 |

Die Durchführung erfolgt Analog zu Beispiel 1. Die Einsatzmengen betragen 200 g Styrol und 0,75 g 2-Mercaptoethanol.

Es wird ein Prepolymer mit einer Molmasse von Mn= 19.960 g/mol mit Mw/Mn= 2,48 erhalten. Die Funktionalität beträgt 1,18.

**Beispiel 3**

Das aus Beispiel 1 hergestellt Prepolymer wird in 500 g Ethylacetat gelöst und auf 75°C erwärmt. Anschließend wird die Lösung mit 10 g Isocyanatoethylmethacrylat versetzt und 24 Stunden gerührt. Das Polymer wird dann in 5 L Methanol ausgefällt, abfiltriert und im Vakuum getrocknet. Man erhält ein umfunktionalisiertes Oligomer, nämlich ein polymerisierbares Polystyrol-Makromonomer mit Methacryl-Endgruppe.

**Beispiel 4 (Vergleichsbeispiel)**

Wie in der JP 1064705A beschrieben, wurde ein Laborreaktor mit zwei Tropftrichtern, Rückflusskühler und Ankerrührer ausgerüstet. Als Vorlage wurden 500 Teile Styrol und 300 Teile Methylisobutylketon (MIBK) in den Reaktor gefüllt. In den einen Tropftrichter (Tropftrichter 1) wurden weitere 500 Teile Styrol gefüllt und in den anderen (Tropftrichter 2) 12,5 Teile AIBN, 21,2 Teile Mercaptopropionsäure sowie 250 weitere Teile MIBK. Nach Inertisierung mit Stickstoff wurde die Lösung im Reaktor auf 90°C erwärmt. Der Inhalt von Tropftrichter 1 wurde tropfenweise über 4 Stunden und der Inhalt aus Tropftrichter 2 tropfenweise über 10 Stunden in den Reaktor gegeben. Nach weiteren 2 Stunden wurde die Reaktion durch Abkühlen auf Raumtemperatur abgebrochen.

Der Umsatz des Styrols betrug 88 %. Das erhaltene Polymer hatte eine Molmasse von $M_n$ = 8.300 g/mol mit $M_w/M_n$ = 2,8. Die Funktionalität beträgt nur 0,7.

Ein Vergleich von Beispiel 1 und 4 zeigt, dass das nach dem erfindungsgemäßen Verfahren hergestellte Oligomer bei vergleichbarer Molmasse eine deutlich geringe Dispersität und eine stark verbesserte Funktionalität nahe 1 aufweist.

Beispiel 2 zeigt im Vergleich mit Beispiel 1 die Auswirkung einer Veränderung des Verhältnisses der Ausgangsstoffe Monomer zu Regler. Wird im Verhältnis zum Monomer weniger Regler eingesetzt, werden Oligomere größerer Molmasse bei größerer Dispersität erhalten.

## Patentansprüche

1. Verfahren zur Herstellung von endgruppenfunktionalisierten Oligomeren auf Basis von Styrol mittels radikalischer Polymerisation, ausgehend von einer Monomermenge umfassend mindestens 90 Mol-% Styrol, wobei

   - die Polymerisation selbstinitiierend gestartet wird
   - und mittels eines difunktionellen Reglers umfassend die funktionellen Gruppen $R_{F1}$ und $R_{F2}$ geregelt wird, wobei die Gruppe $R_{F1}$ eine unsubstituierte Sulfanylgruppe ist, und wobei die Gruppe $R_{F2}$ des Reglers gewählt wird aus der Gruppe bestehend aus Hydroxygruppen (-OH), Carboxygruppen (-COOH), Estergruppen (-COOR), primären Aminogruppen (-NH$_2$), sekundären Aminen (-NHR),
   - wobei eine Bezugsreglermenge derart definiert ist, dass das Stoffmengenverhältnis von Monomeren in der Monomermenge zu Reglermolekülen in der Bezugsreglermenge im Bereich von 100 : 20 bis 100 : 0,5 gewählt wird,

   **dadurch gekennzeichnet, dass**

   - die gesamte Monomermenge vorgelegt wird,
   - die Vorlage mit dem Monomer nicht mehr als 10 Gew.-% eines Lösemittels enthält,
   - der Monomermenge vor Beginn der Reaktion bis zu 5 Gew.-% der Bezugsreglermenge beigegeben wird,
   - die Temperatur der Monomermenge derart geregelt wird, dass die Selbstinitiierung der Polymerisation einsetzt,
   - wobei die weitere Reglerzugabe zu der Polymerisationsreaktion kontinuierlich oder in diskreten Schritten erfolgt, bis ein Polymerisationsumsatz von mindestens 85 % erreicht ist, und zwar derart, dass jederzeit die folgende Bedingung (I) erfüllt ist:

$$U(t) - 0{,}05 \leq X_{Reg}(t) \leq U(t) + 0{,}05 \quad (I)$$

   wobei

   $U(t)$ = Polymerisationsumsatz bis zum Zeitpunkt t
   $U(t) = n_{Mon}(t) / n_{Mon,ges}$
   $n_{Mon}(t)$ = Stoffmenge der im Verlaufe der Polymerisationsreaktion bis zu dem Zeitpunkt t insgesamt umgesetzten Monomere
   $n_{Mon,ges}$ = Stoffmenge aller eingesetzten Monomere $n_{Mon,ges}$ (Stoffmengenumsatz)
   $X_{Reg}(t)$ = Reglermengenbruchteil $X_{Reg}(t) = R(t) / R_B$
   $R(t)$ = bis zum Zeitpunkt (t) insgesamt zugesetzten Reglermenge
   $R_B$ = Bezugsreglermenge.

2. Verfahren nach Anspruche 1, **dadurch gekennzeichnet, dass** die Bedingung (I) bis zu einem Polymerisationsumsatz von mindestens 90 %, bevorzugt von mindestens 95 %, erfüllt ist.

3. Verfahren nach Anspruch 1 oder 2, **dadurch gekennzeichnet, dass** eine noch verbliebene, bisher nicht zugesetzte Reglermenge kontinuierlich oder periodisch zugesetzt wird.

4. Verfahren nach einem der vorangehenden Ansprüche, **dadurch gekennzeichnet, dass** die Monomermenge zusätzlich zu Styrol bis zu 10 Mol.-% anderer Vinylaromaten enthält.

**5.** Verfahren nach einem der vorangehenden Ansprüche, **dadurch gekennzeichnet, dass** außer Styrol und ggf. anderer Vinylaromaten keine weiteren Monomere in der Monomermenge enthalten sind.

**6.** Verfahren nach einem der vorangehenden Ansprüche, **dadurch gekennzeichnet, dass** die Polymerisation bei einer Temperatur von mindestens 100 °C, bevorzugt von mindestens 120 °C durchgeführt wird.

**7.** Verfahren nach einem der vorangehenden Ansprüche, **dadurch gekennzeichnet, dass** die Polymerisation lösemittelfrei durchgeführt wird.

**8.** Verfahren nach einem der vorangehenden Ansprüche, **dadurch gekennzeichnet, dass** das Stoffmengenverhältnis von (insgesamt eingesetzten) Monomeren zu (insgesamt eingesetzten) Reglermolekülen zwischen 100 : 10 und 100 : 0,5 beträgt.

**9.** Verfahren nach einem der vorangehenden Ansprüche, **dadurch gekennzeichnet, dass** als Regler 2-Aminoethanthiol, 2-Mercaptoethanol, 3-Mercaptopropionsäure, 2-Mercaptopropionsäure und/oder 2-Mercaptoessigsäure eingesetzt werden.

**10.** Verfahren nach einem der vorangehenden Ansprüche, **dadurch gekennzeichnet, dass** das zahlenmittlere Molekulargewicht der erhaltenen Oligomere im Bereich von 1 000 g/mol bis 20 000 g/mol liegt.

**11.** Verfahren nach einem der vorangehenden Ansprüche, **dadurch gekennzeichnet, dass** die Polydispersität der erhaltenen Polymere nicht größer als 2,5, bevorzugt nicht größer als 1,9, sehr bevorzugt nicht größer als 1,4 ist.

**12.** Verfahren nach einem der vorangehenden Ansprüche, **gekennzeichnet durch** eine Aufreinigung, indem nicht umgesetzte Monomere und/oder Nebenprodukte aus dem Polymerisationsprodukt entfernt werden.

**13.** Verfahren nach einem der vorangehenden Ansprüche, **dadurch gekennzeichnet, dass**

- in einem nachfolgenden Verfahrensschritt die nach dem Verfahren des Anspruchs 1 erhaltenen Oligomere mit zumindest einer Verbindung Z, die eine funktionelle Gruppe $R_{F3}$ und eine olefinische Doppelbindung aufweist, zu einem umfunktionalisierten Oligomer umgesetzt werden,
- wobei zumindest der die olefinische Doppelbindung enthaltende Teil der Verbindung Z durch Reaktion der funktionellen Gruppe $R_{F2}$ mit der funktionellen Gruppe $R_{F3}$ an die Oligomere angeknüpft wird.

**14.** Verfahren nach Anspruch 13, **dadurch gekennzeichnet, dass**
die Reaktion der Gruppe $R_{F2}$ mit der funktionellen Gruppe $R_{F3}$ eine Substitutionsreaktion ist.

**15.** Verfahren nach Anspruch 13 oder 14, **dadurch gekennzeichnet, dass** die Reaktion der Gruppe $R_{F2}$ mit der funktionellen Gruppe $R_{F3}$ bei einer Temperatur von mindestens 100 °C durchgeführt wird.

**16.** Verfahren nach einem der Ansprüche 13 bis 15, **dadurch gekennzeichnet, dass** die Polymerisation und die Reaktion der Gruppe $R_{F2}$ mit der funktionellen Gruppe $R_{F3}$ in demselben Reaktor durchgeführt werden.

**17.** Verfahren nach einem der Ansprüche 13 bis 16, **dadurch gekennzeichnet, dass** die die funktionelle Gruppe $R_{F3}$ und eine olefinische Doppelbindung aufweisende Verbindung Z gewählt wird aus der Liste bestehend aus Acrylsäure, Methacrylsäure, Acrylsäureester, Methacrylsäureester, Acrylsäureanhydrid, Methacrylsäureanhydrid, Glycidylacrylat, Glycidylmethacrylat, Maleinsäureanhydrid, Acrylsäurechlorid, Methacrylsäurechlorid, 2-Isocyanatoethylacrylat, 2-Isocyanatoethylmethacrylat, 4-Chlormethylstyrol, Itaconsäureanhydrid, 3,4-Epoxycyclohexylmethylacrylat, Epoxycyclohexylmethylmethacrylat..

**18.** Verfahren nach einem der Ansprüche 13 bis 17, **dadurch gekennzeichnet, dass** die erhaltenen umfunktionalisierten Oligomere im Mittel 0,95 bis 1,05 durch die Verbindung Z eingeführte olefinische Doppelbindungen aufweisen.

**19.** Oligomer erhältlich nach dem Verfahren nach einem der Ansprüche 1 bis 12.

**20.** Umfunktionalisiertes Oligomer erhältlich nach dem Verfahren nach einem der Ansprüche 13 bis 18.

**Claims**

1. Process for producing end-group-functionalized oligomers based on styrene by means of free-radical polymerization, starting from an amount of monomer comprising at least 90 mol% styrene, wherein

   - the polymerization is started by self-initiation
   - and is controlled by means of a difunctional regulator comprising the functional groups $R_{F1}$ and $R_{F2}$, where the group $R_{F1}$ is an unsubstituted sulfanyl group and where the group $R_{F2}$ of the regulator is selected from the group consisting of hydroxyl groups (-OH), carboxyl groups (-COOH), ester groups (-COOR), primary amino groups (-NH$_2$), secondary amines (-NHR),
   - wherein a regulator reference amount is defined such that the quantitative ratio of monomers in the amount of monomer to regulator molecules in the regulator reference amount is selected in the range from 100 : 20 to 100 : 0.5,

   **characterized in that**

   - the total amount of monomer is initially charged,
   - the batch with the monomer comprises not more than 10% by weight of a solvent,
   - up to 5% by weight of the regulator reference amount is added to the amount of monomer prior to the start of the reaction,
   - the temperature of the amount of monomer is controlled such that the polymerization starts by self-initiation,
   - wherein the further addition of regulator to the polymerization reaction is carried out continuously or in discrete steps, until a polymerization conversion of at least 85% is achieved, and in such a manner that at all times the following condition (I) is met:

   $$C(t) - 0.05 \leq X_{reg}(t) \leq C(t) + 0.05 \qquad (I)$$

   wherein

   $C(t)$ = polymerization conversion up to the time point t
   $C(t) = n_{mon}(t)/n_{mon,tot}$
   $n_{mon}(t)$ = total amount of reacted monomers in the course of the polymerization reaction up to the time point t
   $n_{mon,tot}$ = amount of all monomers used $n_{mon,tot}$ (amount converted)
   $X_{reg}(t)$ = fractional amount of regulator $X_{reg}(t)$ = R (t) /$R_B$
   $R(t)$ = total amount of regulator added up to the time point (t)
   $R_B$ = regulator reference amount.

2. Process according to Claim 1, **characterized in that**
   condition (I) is met up to a polymerization conversion of at least 90%, preferably of at least 95%.

3. Process according to Claim 1 or 2, **characterized in that**
   a still remaining, previously unadded amount of regulator is added continuously or periodically.

4. Process according to any of the preceding claims, **characterized in that**
   the amount of monomer, in addition to styrene, comprises up to 10 mol% of other vinyl aromatic compounds.

5. Process according to any of the preceding claims, **characterized in that**,
   apart from styrene and optionally other vinyl aromatic compounds, no further monomers are present in the amount of monomer.

6. Process according to any of the preceding claims, **characterized in that**
   the polymerization is carried out at a temperature of at least 100°C, preferably at least 120°C.

7. Process according to any of the preceding claims, **characterized in that**
   the polymerization is carried out free of solvent.

8. Process according to any of the preceding claims, **characterized in that**
the quantitative ratio of (total used) monomers to (total used) regulator molecules is from 100:10 to 100:0.5.

9. Process according to any of the preceding claims, **characterized in that**
the regulators used are 2-aminoethanethiol, 2-mercaptoethanol, 3-mercaptopropionic acid, 2-mercaptopropionic acid and/or 2-mercaptoacetic acid.

10. Process according to any of the preceding claims, **characterized in that**
the number-average molecular weight of the resulting oligomers is in the range of 1000 g/mol to 20 000 g/mol.

11. Process according to any of the preceding claims, **characterized in that**
the polydispersity of the resulting polymers is not greater than 2.5, preferably not greater than 1.9, very preferably not greater than 1.4.

12. Process according to any of the preceding claims, **characterized by**
purification by removing unreacted monomers and/or by-products from the polymerization product.

13. Process according to any of the preceding claims, **characterized in that**

- in a subsequent process step, the oligomers obtained by the process of claim 1 are reacted with at least one compound Z having a functional group $R_{F3}$ and an olefinic double bond to give a refunctionalized oligomer,
- wherein at least that part of the compound Z comprising the olefinic double bond is linked to the oligomers by reaction of the functional group $R_{F2}$ with the functional group $R_{F3}$.

14. Process according to Claim 13, **characterized in that**
the reaction of the group $R_{F2}$ with the functional group $R_{F3}$ is a substitution reaction.

15. Process according to Claim 13 or 14, **characterized in that**
the reaction of the group $R_{F2}$ with the functional group $R_{F3}$ is carried out at a temperature of at least 100°C.

16. Process according to any of Claims 13 to 15, **characterized in that**
the polymerization and the reaction of the group $R_{F2}$ with the functional group $R_{F3}$ are carried out in the same reactor.

17. Process according to any of Claims 13 to 16, **characterized in that**
the compound Z having the functional group $R_{F3}$ and an olefinic double bond is selected from the list consisting of acrylic acid, methacrylic acid, acrylic esters, methacrylic esters, acrylic anhydride, methacrylic anhydride, glycidyl acrylate, glycidyl methacrylate, maleic anhydride, acryloyl chloride, methacryloyl chloride, 2-isocyanatoethyl acrylate, 2-isocyanatoethyl methacrylate, 4-chloromethylstyrene, itaconic anhydride, 3,4-epoxycyclohexylmethyl acrylate, epoxycyclohexylmethyl methacrylate.

18. Process according to any of Claims 13 to 17, **characterized in that**
the resulting refunctionalized oligomers have on average 0.95 to 1.05 olefinic double bonds introduced by the compound Z.

19. Oligomer obtainable by the process according to any of Claims 1 to 12.

20. Refunctionalized oligomer obtainable by the process according to any of Claims 13 to 18.

**Revendications**

1. Procédé de fabrication d'oligomères fonctionnalisés par des groupes terminaux à base de styrène par polymérisation radicalaire, à partir d'une quantité de monomères comprenant au moins 90 % en moles de styrène,

- la polymérisation étant démarrée par auto-initiation,
- et régulée au moyen d'un régulateur bifonctionnel comprenant les groupes fonctionnels $R_{F1}$ et $R_{F2}$, le groupe $R_{F1}$ étant un groupe sulfanyle non substitué et le groupe $R_{F2}$ du régulateur étant choisi dans le groupe constitué par les groupes hydroxy (-OH), les groupes carboxy (-COOH), les groupes ester (-COOR), les groupes amino

primaires (-NH$_2$), les amines secondaires (-NHR),
- une quantité de régulateur de référence étant définie de sorte que le rapport entre les quantités de matière de monomères dans la quantité de monomères et de molécules de régulateur dans la quantité de régulateur de référence soit choisi dans la plage allant de 100:20 à 100:0,5,

**caractérisé en ce que**

- la quantité totale de monomère est chargée initialement,
- le chargement initial avec le monomère ne contient pas plus de 10 % en poids d'un solvant,
- jusqu'à 5 % en poids de la quantité de régulateur de référence est ajoutée à la quantité de monomère avant le début de la réaction,
- la température de la quantité de monomère est ajustée de sorte que l'auto-initiation de la polymérisation débute,
- l'ajout de régulateur supplémentaire à la réaction de polymérisation ayant lieu en continu ou en étapes discrètes, jusqu'à atteindre une conversion de polymérisation d'au moins 85 %, et ce de sorte que la condition (I) suivante soit satisfaite à tout moment :

$$U(t) - 0,05 \leq X_{Reg}(t) \leq U(t) + 0,05 \quad (I)$$

avec

U(t) = conversion de polymérisation au moment t
U(t) = $n_{Mon}(t)/n_{Mon,\, sat}$
$n_{Mon}$ (t) = quantité de matière des monomères transformés au total au cours de la réaction de polymérisation au moment t
$n_{Mon,sat}$ = quantité de matière de tous les monomères utilisés $n_{Mon,sat}$ (conversion de quantité de matière)
$X_{Reg}(t)$ = fraction de quantité de régulateur $X_{Reg}(t) = R(t)/R_B$
R(t) = quantité de régulateur ajoutée au total au moment (t)
$R_B$ = quantité de régulateur de référence.

2. Procédé selon la revendication 1, **caractérisé en ce que** la condition (I) est satisfaite jusqu'à une conversion de polymérisation d'au moins 90 %, de préférence d'au moins 95 %.

3. Procédé selon la revendication 1 ou 2, **caractérisé en ce qu'**une quantité de régulateur encore restante, jusqu'à présent non ajoutée, est ajoutée en continu ou périodiquement.

4. Procédé selon l'une quelconque des revendications précédentes, **caractérisé en ce que** la quantité de monomère contient en plus du styrène jusqu'à 10 % en moles d'autres composés aromatiques de vinyle.

5. Procédé selon l'une quelconque des revendications précédentes, **caractérisé en ce qu'**aucun monomère supplémentaire n'est contenu dans la quantité de monomère en plus du styrène et éventuellement d'autres composés aromatiques de vinyle.

6. Procédé selon l'une quelconque des revendications précédentes, **caractérisé en ce que** la polymérisation est réalisée à une température d'au moins 100 °C, de préférence d'au moins 120 °C.

7. Procédé selon l'une quelconque des revendications précédentes, **caractérisé en ce que** la polymérisation est réalisée sans solvant.

8. Procédé selon l'une quelconque des revendications précédentes, **caractérisé en ce que** le rapport entre les quantités de matières de monomères (utilisés au total) et de molécules de régulateur (utilisées au total) est compris entre 100:10 et 100:0,5.

9. Procédé selon l'une quelconque des revendications précédentes, **caractérisé en ce que** du 2-aminoéthanethiol, du 2-mercaptoéthanol, de l'acide 3-mercaptopropionique, de l'acide 2-mercaptopropionique et/ou de l'acide 2-mercaptoacétique sont utilisés en tant que régulateur.

**10.** Procédé selon l'une quelconque des revendications précédentes, **caractérisé en ce que** le poids moléculaire moyen en nombre des oligomères obtenus se situe dans la plage allant de 1 000 g/mol à 20 000 g/mol.

**11.** Procédé selon l'une quelconque des revendications précédentes, **caractérisé en ce que** la polydispersité des polymères obtenus n'est pas supérieure à 2,5, de préférence pas supérieure à 1,9, de manière très préférée pas supérieure à 1,4.

**12.** Procédé selon l'une quelconque des revendications précédentes, **caractérisé par** une purification lors de laquelle les monomères non réagis et/ou les produits secondaires sont éliminés du produit de la polymérisation.

**13.** Procédé selon l'une quelconque des revendications précédentes, **caractérisé en ce que**

- lors d'une étape de procédé ultérieure, les oligomères obtenus par le procédé de la revendication 1 sont mis en réaction avec au moins un composé Z, qui comprend un groupe fonctionnel $R_{F3}$ et une double liaison oléfinique, pour former un oligomère refonctionnalisé,
- au moins la partie du composé Z contenant la double liaison oléfinique étant reliée aux oligomères par réaction du groupe fonctionnel $R_{F2}$ avec le groupe fonctionnel $R_{F3}$.

**14.** Procédé selon la revendication 13, **caractérisé en ce que** la réaction du groupe $R_{F2}$ avec le groupe fonctionnel $R_{F3}$ est une réaction de substitution.

**15.** Procédé selon la revendication 13 ou 14, **caractérisé en ce que** la réaction du groupe $R_{F2}$ avec le groupe fonctionnel $R_{F3}$ est réalisée à une température d'au moins 100 °C.

**16.** Procédé selon l'une quelconque des revendications 13 à 15, **caractérisé en ce que** la polymérisation et la réaction du groupe $R_{F2}$ avec le groupe fonctionnel $R_{F3}$ sont réalisées dans le même réacteur.

**17.** Procédé selon l'une quelconque des revendications 13 à 16, **caractérisé en ce que** le composé Z comprenant le groupe fonctionnel $R_{F3}$ et une double liaison oléfinique est choisi dans la liste constituée par l'acide acrylique, l'acide méthacrylique, les esters de l'acide acrylique, les esters de l'acide méthacrylique, l'anhydride de l'acide acrylique, l'anhydride de l'acide méthacrylique, l'acrylate de glycidyle, le méthacrylate de glycidyle, l'anhydride de l'acide maléique, le chlorure de l'acide acrylique, le chlorure de l'acide méthacrylique, l'acrylate de 2-isocyanatoéthyle, le méthacrylate de 2-isocyanatoéthyle, le 4-chlorométhylstyrène, l'anhydride de l'acide itaconique, l'acrylate de 3,4-époxycyclohexylméthyl, le méthacrylate d'époxycyclohexylméthyle.

**18.** Procédé selon l'une quelconque des revendications 13 à 17, **caractérisé en ce que** les oligomères refonctionnalisés obtenus comprennent en moyenne 0,95 à 1,05 double liaison oléfinique introduite par le composé Z.

**19.** Oligomère pouvant être obtenu par le procédé selon l'une quelconque des revendications 1 à 12.

**20.** Oligomère refonctionnalisé pouvant être obtenu par le procédé selon l'une quelconque des revendications 13 à 18.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3842059 A
- JP 63083107 A
- JP 61064705 A
- JP 1064705 A

**In der Beschreibung aufgeführte Nicht-Patentliteratur**

- **J. BRANDRUP ; E.H. IMMERGUT.** Polymer Handbook. II/97-II/98
- *Polymer Bulletin,* 2001, vol. 45, 487-494
- **T. O. AHN ; Y. C. HA ; M.-H. OH ; S.-S. LEE ; S. W. LEE ; H. M. JEONG.** *J. Macromol. Sci., Phys.,* 1995, vol. B34, 215-229
- **K. KAERIYAMA.** *Nippon Kagaku Zasshi,* 1967, vol. 88, 783-786
- On-line Determination of the Conversion in a Styrene Bulk Polymerization Batch Reactor using Near-Infrared Spectroscopy. *Journal of Applied Polymer Science,* 2002, vol. 84 (1), 90-98
- Recent Developments in Hardware Sensors for the On-Line Monitoring of Polymerization Reactions. *J.M.S.-Rev. Macromol. Chem Phys.,* 1999, vol. C39 (1), 57-134